# EUROPÄISCHE PATENTSCHRIFT

(11) **EP 0 783 422 B1**
(45) Veröffentlichungstag und Bekanntmachung des Hinweises auf die Patenterteilung: **13.09.2000**
(21) Anmeldenummer: 96914080.5
(22) Anmeldetag: 14.05.1996
(51) Int. Cl.: B60T 13/68, B60T 8/36, B60T 8/48, B60T 8/24, F16K 31/40

(54) **STEUERBARES VENTIL**
CONTROLLABLE VALVE
SOUPAPE REGULABLE

(30) Priorität: 10.08.1995 DE 19529363
(43) Veröffentlichungstag der Anmeldung: 16.07.1997
(73) Patentinhaber: ROBERT BOSCH GMBH, 70442 Stuttgart (DE)
(72) Erfinder: SCHEFFEL, Martin, D-71665 Vaihingen (DE); STOKMAIER, Gerhard, D-71706 Markgröningen (DE); SCHWARZ, Hans-Friedrich, D-75417 Mühlacker (DE)
(86) Internationale Anmeldenummer: DE9600848
(87) Internationale Veröffentlichungsnummer: WO9706040

(56) Entgegenhaltungen:
- EP-A- 0 403 144
- FR-A- 2 275 715
- US-A- 2 914 086
- US-A- 5 344 118
- PATENT ABSTRACTS OF JAPAN vol. 7, no. 95 (M-209) [1240] , 21.April 1983 & JP,A,58 017275 (TOKYO SHIBAURA DENKI K.K.)

## Beschreibung

### Stand der Technik

Die Erfindung geht aus von einem steuerbaren Ventil nach der Gattung des Hauptanspruchs. Derartige Ventile finden Verwendung als sog. Ansaugventile in hydraulischen Bremsanlagen für Kraftfahrzeuge, die über eine Blockierschutz-, eine Antriebschlupfregelungs- oder eine Fahrdynamikregelungseinrichtung verfügen. Sie sind einer Rückförderpumpe in einer von einem Hauptbremszylinder kommenden Ansaugleitung vorgeschaltet. Diese Ventile sind in ihrer Grundstellung geschlossen und können beim Betrieb der Rückförderpumpe geöffnet werden, damit diese Bremsflüssigkeit aus dem Hauptbremszylinder ansaugen kann.

Dabei können Schwierigkeiten auftreten, wenn die Rückförderpumpe bei nicht getretenem Bremspedal Bremsflüssigkeit aus dem Hauptbremszylinder selbst ansaugen muß. Der Druckaufbau und damit die Betätigung der Fahrzeugbremsen verzögert sich. Um den Ansaugwiderstand klein zu halten, wird eine Öffnungsquerschnittsfläche des Ventils, d. h. normalerweise der Bohrungsdurchmesser eines Ventilsitzes, groß gewählt.

Dies bringt jedoch den Nachteil mit sich, daß die erforderlichen Kräfte zum Öffnen des Ventils groß sind. Die Betätigungskräfte zum Öffnen des Ventils gewinnen besonders dann an Bedeutung, wenn das Ansaugventil bei betätigtem Hauptbremszylinder geöffnet werden soll. In diesem Fall steht die Bremsflüssigkeit an einem Einlaß des Ventils unter Druck, das Ventil muß gegen eine hohe Druckdifferenz geöffnet werden. Ein starker und infolgedessen groß bauender Elektromagnet ist notwendig.

Durch das Dokument FR-A-2275715 ist bekannt ein steuerbares Ventil mit einer ersten Ventilstufe, die einen ersten betätigbaren Ventilschließkörper aufweist, der mit einem ersten Ventilsitz zusammenwirkt, mit einer zweiten Ventilstufe, die einen zweiten Ventilschließkörper, der mit einem zweiten Ventilsitz zusammenwirkt, aufweist, wobei dessen Öffnungsquerschnittsfläche größer als eine Öffnungsquerschnittsfläche des ersten Ventilsitzes ist und wobei der zweite Ventilschließkörper den ersten Ventilsitz aufweist, mit einem ersten Federelement zum Drücken des ersten Ventilschließkörpers gegen den ersten Ventilsitz und mit einem zweiten Federelement zum Abdrücken des zweiten Ventilschließkörpers vom zweiten Ventilsitz. Der erste Ventilsitz und der zweite Ventilschließkörper befinden sich an einem Steuerkolben, der spielarm innerhalb einer zylindrischen Gehäusebohrung geführt ist und von einem kalibrierten Drosselkanal durchzogen ist. Dank der aufeinander abgestimmten Federelemente ist das Ventil normalerweise geschlossen, so daß ein an seinen Eingang gelegter Druck vom Ausgang ferngehalten wird. Beim Abheben des ersten Ventilschließkörpers vom ersten Ventilsitz ist zum Auslaß hin ein Durchlaßkanal geöffnet, dessen Querschnitt wesentlich größer ist als der Durchlaßquerschnitt des Drosselkanals. Dies hat zur beabsichtigten Folge, daß der Drosselkanal durchströmt wird und dabei einen Druckunterschied im Sinne eines Druckgefälles zwischen seinem Drosselkanaleingang und seinem Drosselkanalausgang erzeugt. Dieser Druckunterschied wird am Steuerkolben als ein Servodruck wirksam und erzeugt eine Verschiebekraft, die das zweite Federelement unterstützend ein Wegdrücken des Steuerkolbens und dabei auch des zweiten Ventilschließkörpers von dem zweiten Ventilsitz bewirkt. Das Ventil hat den Vorteil, daß mittels eines relativ schwachen Elektromagnets die relativ enge erste Ventilstufe öffenbar ist und mit dem Öffnen beginnend ein Druckgefälle, das zwischen dem Eingang und dem Ausgang des Ventils vorhanden ist, zur Gewinnung von Steuerdruck dient zum Bewegen des Steuerkolbens in die Richtung, in die der erste Ventilschließkörper vorauseilt. Erkennbar ist, daß hierfür der Aufwand für den Steuerkolben und seine spielarme genaue Einpassung in eine zylindrische Gehäusebohrung notwendig ist.

Durch das Dokument patent abstracts of Japan vol.7,no.95(M-209) [1240], 21.April,1983 und JP,A,58 017275 (Tokyo Shibaura Denki K.K.) bekannt ist ein weiteres steuerbares Ventil mit einer ersten Ventilstufe, die einen ersten betätigbaren Ventilschließkörper aufweist, der mit einem ersten Ventilsitz zusammenwirkt, mit einer zweiten Ventilstufe, die einen zweiten umströmbaren Ventilschließkörper, der mit einem zweiten Ventilsitz zusammenwirkt, aufweist, wobei dessen Querschnittsfläche größer als eine Öffnungsquerschnittsfläche des ersten Ventilsitzes ist und wobei der zweite Ventilschließkörper den ersten Ventilsitz aufweist, mit einem ersten Federelement zum Drücken des ersten Ventilschließkörpers gegen den ersten Ventilsitz und mit einem zweiten Federelement zum Abdrücken des zweiten Ventilschließkörpers vom zweiten Ventilsitz, wobei Wirkrichtungen der Federelemente gegeneinander gerichtet sind und die Federelemente derart abgestimmt sind, daß bei drucklosem Ventil und also fehlendem Druckunterschied zwischen dem Eingang und dem Ausgang das zweite Federelement den zweiten Ventilkörper in einem vorgewählten Abstand von dem zweiten Ventilsitz in der Schwebe hält. Das in dieser Art offenstehende Ventil läßt also den Ausfluß und den Zufluß von Druckmittel wenigstens dann zu, wenn die Strömungsgeschwindigkeit des Druckmittels relativ gering ist und zu keiner wesentlichen Veränderung der Schwebestellung des zweiten Ventilschließkörpers führt. Ein solches Ventil ist deshalb dann nicht anwendbar, wenn in der Grundstellung des Ventils ein Druckmitteldurchfluß nachteilig und oder gar unzulässig ist. Zum Wegbewegen des ersten Ventilschließgliedes vom ersten Ventilsitz ist ein Elektromagnet vorgesehen.

### Vorteile der Erfindung

Das erfindungsgemäße Ventil mit den Merkmalen des Anspruchs 1 hat den Vorteil, daß zunächst eine erste Ventilstufe mit einer kleinen Öffnungsquerschnittsfläche geöffnet, wozu eine kleine Betätigungskraft ausreicht. Das Öffnen der ersten Ventilstufe bewirkt einen Druckabfall, genauer eine Verringerung des Druckgefälles am erfindungsgemäßen Ventil, in dessen Folge eine zweite Ventilstufe von einem Federelement geöffnet wird und eine große Öffnungsquerschnittsfläche freigibt. Sofern die Druckdifferenz nach dem Öffnen der ersten Ventilstufe so groß ist, daß die zweite Ventilstufe nicht gegen diese Druckdifferenz öffnet, genügt der Bremsflüssigkeitsdurchsatz durch die erste Ventilstufe des erfindungsgemäßen Ventils, um der Rückförderpumpe ausreichend Bremsflüssigkeit für einen schnellen Druckaufbau zuzuführen.

Das erfindungsgemäße Ventil hat den weiteren Vorteil, daß ausschließlich die erste Ventilstufe betätigt werden muß, der die gesamte Betätigungskraft zur Verfügung steht. Die zweite Ventilstufe arbeitet selbsttätig. Das erfindungsgemäße Ventil hat einen einfachen Aufbau und eine kompakte Bauweise. Aufgrund der geringen Betätigungskräfte kann ein für die Magnetventile hydraulischer Fahrzeugbremsanlagen üblicher Magnet verwendet werden, die Außenabmessungen des erfindungsgemäßen Ventils können mit denjenigen von in hydraulischen Fahrzeugbremsanlagen verwendeten Ventilen übereinstimmen, so daß der Einbau des erfindungsgemäßen Ventils in eine hydraulische Fahrzeugbremsanlage problemlos ist.

Die Unteransprüche haben vorteilhafte Weiterbildungen und Verbesserungen der im Hauptanspruch angegebenen Erfindung zum Gegenstand.

Das erfindungsgemäße Ventil kann beispielsweise mechanisch, pneumatisch oder hydraulisch betätigt werden. Vorzugsweise erfolgt die Betätigung elektromagnetisch (Anspruch 4).

### Zeichnung

Die Erfindung wird nachfolgend anhand in der Zeichnung dargestellter Ausführungsbeispiele näher erläutert. Es zeigen:
Figur 1 ein erfindungsgemäßes Ventil im Achsschnitt;
Figuren 2, 3 und 4 Ausschnitte abgewandelter Ausführungsformen des in Figur 1 dargestellten Ventils gemäß der Erfindung; und
Figur 5 den hydraulischen Schaltplan einer Fahrzeugbremsanlage gemäß der Erfindung.

### Beschreibung der Ausführungsbeispiele

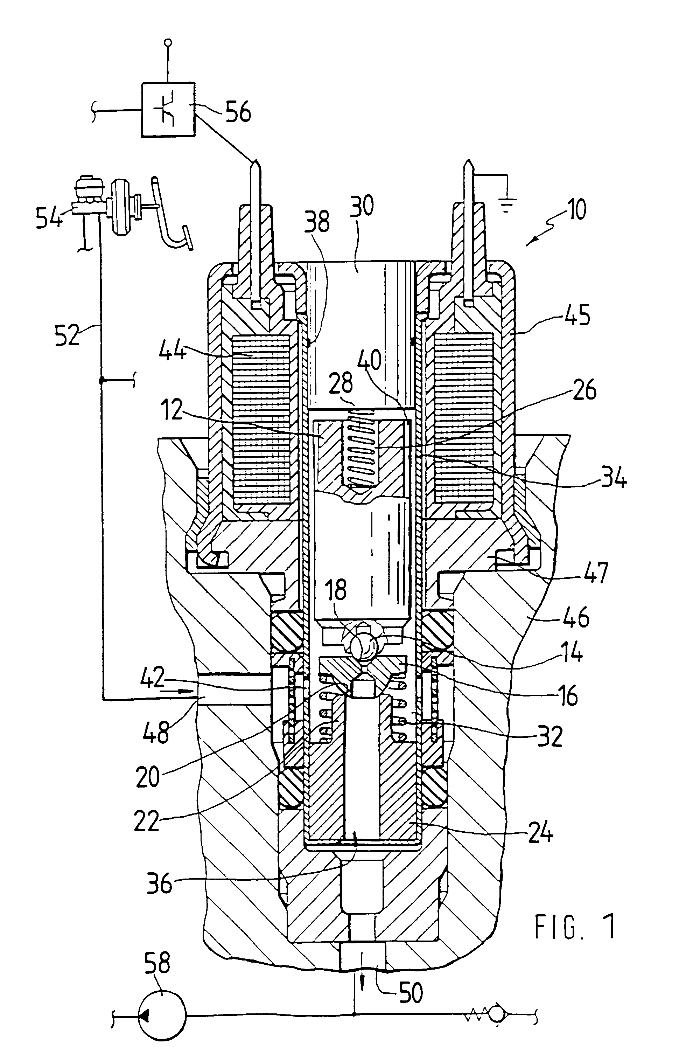

Das in Figur 1 dargestellte, erfindungsgemäße Ventil 10 weist einen zylindrischen Anker 12 auf, in dessen einem Stirnende eine Kugel als erster Ventilschließkörper 14 durch Verstemmen angebracht ist. Koaxial zum Anker 12 ist ein zweiter Ventilschließkörper 16 mit einem konischen, ersten Ventilsitz 18 für den ersten Ventilschließkörper 14 angeordnet. Dieser zweite Ventilschließkörper 16 hat die Form einer dem Anker 12 abgewandten Kugelkappe mit einem Radialflansch an einer dem Anker 12 zugewandten Grundseite der Kugelkappe. Er ist axial durchbohrt, seine Mündung ist konisch als erster Ventilsitz 18 ausgebildet.

Ein zweiter, konischer Ventilsitz 20 ist an einem rohrartigen Abschnitt 22 eines zylindrischen, axial durchbohrten Ventilsitzteils 24 ausgebildet. Der zweite Ventilsitz 20 wirkt mit dem kugelkappenförmigen Abschnitt des zweiten Ventilschließkörpers 16 zusammen. Das Ventilsitzteil 24 ist koaxial zum Anker 12 und dem zweiten Ventilschließkörper 16 angeordnet.

An seiner dem ersten Ventilschließkörper 14 abgewandten Stirnseite weist der Anker 12 ein Sackloch 26 auf, in das eine Schraubendruckfeder 28 hineingestellt ist. Die Schraubendruckfeder 28 stützt sich gegen einen zylindrischen, zum Anker 12 koaxialen Magnetkern 30 ab. Sie drückt den am Anker 12 angebrachten, ersten Ventilschließkörper 14 gegen die erste Ventilsitzfläche 18. Der erste Ventilschließkörper 14 drückt seinerseits gegen den zweiten, die erste Ventilsitzfläche 18 aufweisenden Ventilschließkörper 16 gegen den zweiten Ventilsitz 20. Das erfindungsgemäße Ventil 10 ist in seiner Grundstellung geschlossen.

Der erste Ventilschließkörper 14 bildet mit der ersten Ventilsitzfläche 18 eine erste Ventilstufe des erfindungsgemäßen Ventils 10. Der zweite Ventilschließkörper 16 bildet zusammen mit der zweiten Ventilschließfläche 20 eine zweite Ventilstufe des erfindungsgemäßen Ventils 10. Ein Dichtsitzdurchmesser des ersten Ventilsitzes 18 und damit eine Öffnungsquerschnittsfläche der ersten Ventilstufe ist kleiner als ein Dichtsitzdurchmesser des zweiten Ventilsitzes 20 bzw. eine Öffnungsquerschnittsfläche der zweiten Ventilstufe.

Der rohrartige Abschnitt 22 des Ventilsitzteils 24 nimmt eine zweite Schraubendruckfeder 32 auf, die sich am Ventilsitzteil 24 abstützt und am Radialflansch des zweiten Ventilschließkörpers 16 angreift. Die zweite Schraubendruckfeder 32 wirkt der ersten Schraubendruckfeder 28 entgegen. Allerdings ist die zweite Schraubendruckfeder 32 schwächer ausgebildet, so daß die erste Schraubendruckfeder 28 in der dargestellten Grundstellung des erfindungsgemäßen Ventils 10 beide Ventilstufen 14, 18, 16, 20 geschlossen hält.

Der Anker 12 mit dem ersten Ventilschließkörper 14 und der zweite Ventilschließkörper 16 sind in axialer Richtung verschiebbar in einem Rohrstück 34 aufgenommen, dessen eines Ende vom Ventilsitzteil 24 und dessen anderes Ende vom Magnetkern 30 verschlossen ist. Das Ventilsitzteil 24 ist hydraulisch dicht in das Rohrstück eingepreßt und beispielsweise durch Umbördeln des Rohrstücks 34 nach innen axial gehalten, wobei das Rohrstück 34 ein Loch als Ventilauslaß 36 aufweist. Der Magnetkern 30 ist durch eine umlaufende Schweißung 38 hydraulisch dicht mit dem Rohrstück 34 verbunden.

Der Anker 12 weist durchgehende Längsnuten 40 an seinem Umfang zum Durchlaß von Fluid zwischen sich und dem Rohrabschnitt 34 auf.

Als Einlaß 42 weist das erfindungsgemäße Ventil 10 mehrere Querbohrungen im Rohrstück 34 auf, die sich in einer radialen Ebene etwa in Höhe des zweiten Ventilschließkörpers 16 befinden. Eine Druckdifferenz zwischen Einlaß 42 und Auslaß 36 des erfindungsgemäßen Ventils 10 wirkt schließend auf die beiden Ventilstufen 14, 18, 16, 20.

Das Rohrstück 34 bildet mit den beiden Ventilschließkörpern 14, 16 und dem Ventilsitzteil 24 einen hydraulischen Teil des erfindungsgemäßen Ventils 10.

Zur Betätigung des Ventils ist eine Spule 44 auf das den Magnetkern 30 enthaltende Ende des Rohrstücks 34 aufgesteckt. Der Magnetkern 30 und der Anker 12 ragen jeweils bis etwa zur Mitte in die Spule 44 hinein. Die Spule 44 bildet mit dem Magnetkern 30, dem Spulengehäuse 45 und dem Flansch 47 einen Elektromagneten.

Das Ventil 10 ist in einen Hydraulikblock 46 einer im übrigen nicht dargestellten Fahrzeugbremsanlage eingesetzt. Vom Hydraulikblock 46 ist in Figur 1 ein Ausbruch mit einem radial zum Einlaß 42 des Ventils führenden Einlaßkanal 48 und einem axial von dessen Auslaß 36 wegführenden Auslaßkanal 50 dargestellt. Symbolisch ist in Figur 1 die hydraulische und elektrische Beschaltung des erfindungsgemäßen Ventils 10 in seiner Verwendung als Ansaugventil dargestellt.

Das erfindungsgemäße Ventil 10 funktioniert wie folgt: Der Einlaß 42 des Ventils 10 ist über eine Ansaugleitung 52 an einen Hauptbremszylinder 54 angeschlossen. Druckbeaufschlagung durch Betätigung des Hauptbremszylinders 54 wirkt schließend auf die beiden Ventilstufen 14, 18, 16, 20 des Ventils 10. Zum Öffnen des Ventils 10 wird dessen Spule 44 von einem Steuergerät 56 der Fahrzeugbremsanlage mit Strom beaufschlagt, der Magnetkern 30 zieht den Anker 12 an und hebt dadurch den ersten Venilschließkörper 14 vom ersten Ventilsitz 18 ab, die erste Ventilstufe ist geöffnet. Eine an den Auslaß 36 des Ventils 10 angeschlossene Rückförderpumpe 58 erhält Bremsflüssigkeit aus dem Hauptbremszylinder 54.

Ein eventuell zwischen Einlaß 42 und Auslaß 36 bestehendes Druckgefälle verringert sich durch das Öffnen der ersten Ventilstufe 14, 18, so daß der zweite Ventilschließkörper 16 von der zweiten Schraubendruckfeder 32 vom zweiten Ventilsitz 20 abgehoben wird. Die zweite Ventilstufe 16, 20, die eine größere Öffnungsquerschnittsfläche als die erste Ventilstufe 14, 18 aufweist, ist geöffnet. Durch das Öffnen der zweiten Ventilstufe 16, 20 bildet das erfindungsgemäße Ventil 10 nur einen kleinen Strömungswiderstand für die Bremsflüssigkeit, damit die Rückförderpumpe 58 ausreichend Bremsflüssigkeit für einen schnellen Druckaufbau aus dem Hauptbremszylinder 54 ansaugen kann. Ist das Druckgefälle zwischen Einlaß 42 und Auslaß 36 auch nach Öffnen der ersten Ventilstufe 14, 18 so groß, daß die Schraubendruckfeder 32 den zweiten Ventilschließkörper 16 gegen den Bremsflüssigkeitsdruck nicht vom zweiten Ventilsitz 20 abhebt, so ist der Durchsatz durch die erste Ventilstufe 14, 18 ausreichend für einen schnellen Druckaufbau mittels der Rückförderpumpe 58.

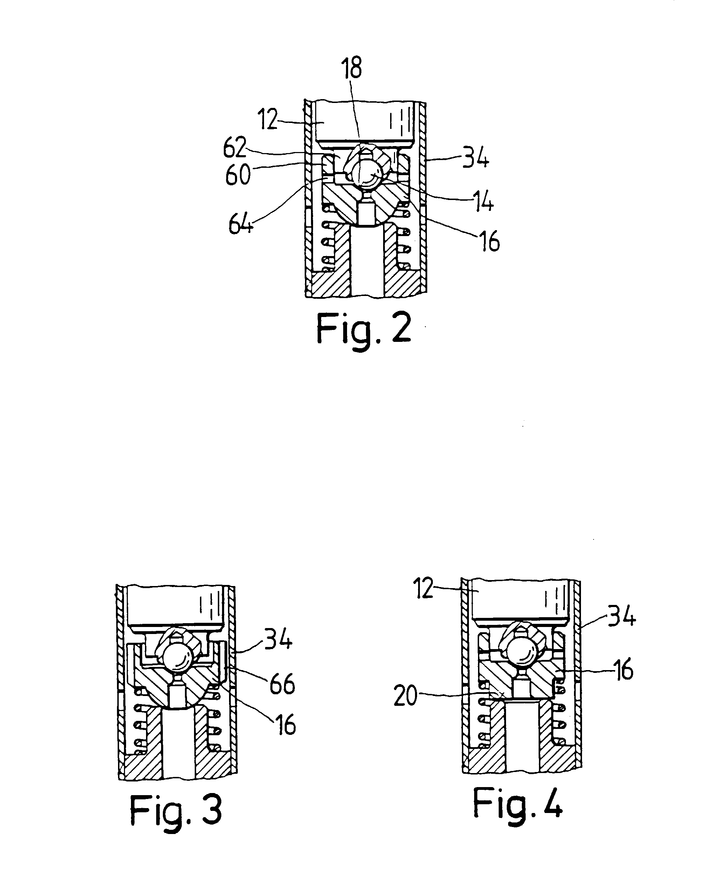

Die Figuren 2 bis 4 zeigen Abwandlungen der in Figur 1 dargestellten Ausführungsform eines erfindungsgemäßen Ventils. Es ist jeweils ein Abschnitt des Rohrstücks 34 im Bereich der beiden Ventilstufen 14, 18, 16, 20 dargestellt. Nachfolgend werden lediglich die Abänderungen beschrieben, für gleiche Bauteile werden übereinstimmende Bezugszeichen verwendet.

In Figur 2 ist der erste Ventilschließkörper 16 am Anker 12 geführt: Er geht'zu diesem Zweck in Richtung des Ankers 12 einstückig in einen niedrigen Hohlzylinderabschnitt 60 über, mit dem er einen kurzen Ankerzapfen 62 umgreift. Zwischen dem Hohlzylinderabschnitt 60 und dem Ankerzapfen 62 besteht eine Spielpassung, der zweite Ventilschließkörper ist in axialer Richtung gegenüber dem Anker 12 verschiebbar.

Am Grund des Hohlzylinderabschnitts 60 sind Radialbohrungen 64 im zweiten Ventilschließkörper 16 angebracht, die den Fluiddurchlaß durch die erste Ventilstufe 14, 18 verbessern.

Beim in Figur 3 dargestellten Abschnitt einer Ausführungsform des erfindungsgemäßen Ventils ist der zweite Ventilschließkörper 16 im Rohrstück 34 in axialer Richtung verschiebbar geführt: Er weist an seinem Umfang einen geringen radialen Spalt zum Rohrstück 34 auf. Um den Fluiddurchlaß zwischen zweitem Ventilschließkörper 16 und dem Rohrstück 34 zu verbessern, ist der Umfang des zweiten Ventilschließkörpers 16 mit durchgehenden Längsnuten 66 versehen.

Bei der in Figur 4 dargestellten Ausführungsform des erfindungsgemäßen Ventils weist die zweite Ventilstufe 16, 20 einen ebenen Ventilsitz 20 auf. Der zweite Ventilschließkörper 16 ist, wie bei der in Figur 2 dargestellten Ausführungsform, am Anker 12 geführt.

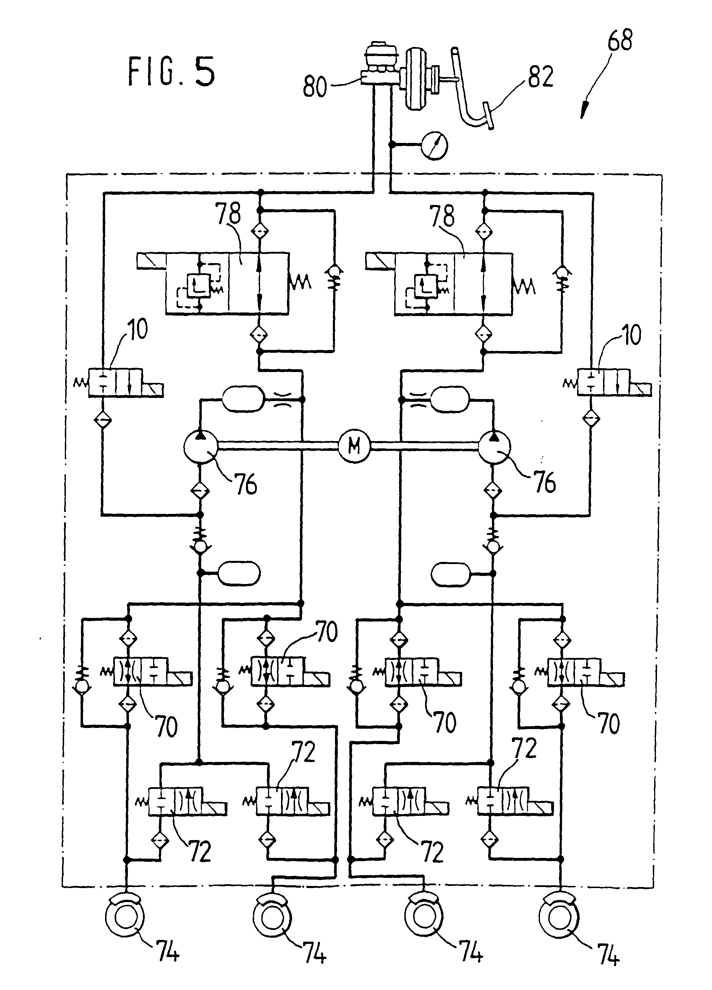

Das beschriebene, erfindungsgemäße Ventil 10 ist vorteilhaft in einer hydraulischen Fahrzeugbremsanlage 68 verwendbar, die über eine Antriebsschlupf- und/oder eine Fahrdynamikregeleinrichtung verfügt, wie sie in Figur 5 dargestellt ist. Derartige Fahrzeugbremsanlagen sind ansich bekannt und beispielsweise beschrieben in DE 42 32 311 C1, auf die hier vollinhaltlich bezug genommen wird.

Die Fahrzeugbremsanlage 68 weist zwei voneinander unabhängige Bremskreise auf. Zur Blockierschutzregelung weist sie ein Einlaßventil 70 und ein Auslaßventil 72 für jede Radbremse 74 sowie eine Rückförderpumpe 76 in jedem Bremskreis auf. Bei Blockiergefahr eines Fahrzeugrades erfolgt mittels des zugeordneten Einlaß- und Auslaßventils 70, 72 eine Bremsdruckmodulation in ansich bekannter Weise.

Für die Antriebsschlupf- und die Fahrdynamikregelung ist zusätzlich ein Umschaltventil 78 in jedem Bremskreis zwischen einem Hauptbremszylinder 80 und den Einlaßventilen 70 dieses Bremskreises angeordnet.

Das erfindungsgemäße Ventil 10 ist als Ansaugventil zwischen dem Hauptbremszylinder 80 und einer Saugseite der Rückförderpumpe 76 in jeden Bremskreis eingebaut. seine Verwendung ist von Vorteil wegen der geringen, erforderlichen Betätigungskraft beim Öffnen der ersten Ventilstufe, wenn das Ventil 10 mit Druck beaufschlagt ist, also bei getretenem Bremspedal 82 des Hauptbremszylinders 80. Der kleine Öffnungsquerschnitt der ersten Ventilstufe reicht bei unter Druck stehender Bremsflüssigkeit aus, die Rückförderpumpe 76 mit genügend Bremsflüssigkeit zu versorgen um einen schnellen Bremsflüssigkeitsdruckaufbau mittels der Rückförderpumpe 76 sicherzustellen.

Ist der Druck am Einlaß des erfindungsgemäßen Ventils 10 gering, beispielsweise bei nicht getretenem Bremspedal 82, so öffnet mit dem Öffnen der ersten Ventilstufe auch die zweite Ventilstufe, es steht ein großer Öffnungsquerschnitt für die Bremsflüssigkeit zur Verfügung, um den Ansaugwiderstand der Rückförderpumpe 76 klein zu halten. Dies ist wichtig für die Antriebsschlupfregelung und mehr noch für die Fahrdynamikregelung, die auf ein sehr schnelles Ansprechen der Radbremsen 74 und damit auf einen sehr schnellen Druckaufbau mittels der Rückförderpumpen 76 angewiesen sind.

## Patentansprüche

1. Steuerbares Ventil (10) mit einem Einlaß (42) und einem Auslaß (36) und dazwischen mit einer ersten Ventilstufe, die einen ersten betätigbaren Ventilschließkörper (14) aufweist, der mit einem ersten Ventilsitz(18) zusammenwirkt, mit einer zweiten Ventilstufe, die einen zweiten umströmbaren Ventilschließkörper (16), der mit einem zweiten Ventilsitz (20) zusammenwirkt, aufweist, wobei dessen Öffnungsquerschnittsfläche größer als eine Öffnungsquerschnittsfläche des ersten Ventilsitzes (18) ist und wobei der zweite Ventilschließkörper (16) den ersten Ventilsitz (18) aufweist, mit einem ersten Federelement (28) zum Drücken des ersten Ventilschließkörpers (14) gegen den ersten Ventilsitz (18) und zum Schließen der zweiten Ventilstufe und mit einem zweiten Federelement (32) zum Abdrücken des zweiten Ventilschließkörpers (16) vom zweiten Ventilsitz (20), wobei das erste und das zweite Federelement (28, 32) mittelbar gegeneinander wirken und die Kraft des ersten Federelements (28) größer als die Kraft des zweiten Federelements (32) ist, dadurch gekennzeichnet, daß eine Druckdifferenz zwischen dem Einlaß (42) und dem Auslaß (36) auch nach dem Öffnen der ersten Ventilstufe (14, 18) schließend auf die zweite Ventilstufe (16, 20) wirkt.

2. Ventil nach Anspruch 1, **dadurch gekennzeichnet,** daß das Ventil (10) einen Elektromagneten (30, 44) zum Betätigen des ersten Ventilschließkörpers (14) aufweist.

3. Ventil nach Anspruch 1 oder 2, **dadurch gekennzeichnet**, daß der erste Ventilschließkörper (14) und der zweite Ventilschließkörper (16) koaxial in einem den zweiten Ventilsitz (20) aufweisenden Rohrstück (34) axial verschiebbar untergebracht sind.

4. Ventil nach Anspruch 3, **dadurch gekennzeichnet**, daß ein zylindrischer Magnetkern (30) koaxial und hydraulisch dicht in dem Rohrstück (34) angebracht ist.

5. Ventil nach Anspruch 3 oder 4, **dadurch gekennzeichnet**, daß der erste Ventilschließkörper (14) einen Anker (12) aufweist, und daß ein Längsabschnitt des Rohrstücks (34) von einer Spule (44) des Elektromagneten umgeben ist, in die der Magnetkern (30) und der Anker (12) hineinragen.

6. Hydraulische Fahrzeugbremsanlage (78) mit einer Blockierschutz- und/oder einer Antriebschlupfregel- und/oder einer Fahrdynamikregeleinrichtung, die wenigstens eine Rückförderpumpe (76) und eine dieser vorgeschaltete, von einem Hauptzylinder (80) kommende Ansaugleitung mit einem eingebauten steuerbaren Ventil aufweist, das als ein Ansaugventil (10) dient, dadurch gekennzeichnet, daß das Ansaugventil (10) gestaltet ist als ein Ventil nach einem der vorangehenden Ansprüche 1 bis 5.

## Claims

1. Controllable valve (10) with an inlet (42) and an outlet (36) and, between these, with a first valve stage having a first actuable valve closing body (14) which cooperates with a first valve seat (18), with a second valve stage having a second valve closing body (16) around which the flow is capable of passing and which cooperates with a second valve seat (20), the opening cross section area of the latter being greater than an opening cross section area of the first valve seat (18), and the second valve closing body (16) having the first valve seat (18), with a first spring element (28) for pressing the first valve closing body (14) against the first valve seat (18) and for closing the second valve stage, and with a second spring element (32) for pressing the second valve closing body (16) away from the second valve seat (20), the first and the second spring element (28, 32) acting indirectly counter to one another, and the force of the first spring element (28) being greater than the force of the second spring element (32), characterized in that a pressure difference between the inlet (42) and the outlet (36) acts with a closing effect on the second valve stage (16, 20) even after the opening of the first valve stage (14, 18).

2. Valve according to Claim 1, characterized in that the valve (10) has an electromagnet (30, 44) for actuating the first valve closing body (14).

3. Valve according to Claim 1 or 2, characterized in that the first valve closing body (14) and the second valve closing body (16) are accommodated coaxially, so as to be axially displaceable, in a tubular piece (34) having the second valve seat (20).

4. Valve according to Claim 3, characterized in that a cylindrical magnetic core (30) is mounted in the tubular piece (34) coaxially and in a hydraulically leak-tight manner.

5. Valve according to Claim 3 or 4, characterized in that the first valve closing body (14) has an armature (12), and in that a longitudinal portion of the tubular piece (34) is surrounded by a coil (44) of the electromagnet, the magnetic core (30) and the armature (12) projecting into the said coil.

6. Hydraulic vehicle brake system (78) with an anti-lock and/or a traction-control and/or a driving-dynamics control device, which has at least one return pump (76) and one intake line which precedes the latter, comes from a master cylinder (80) and has a built-in controllable valve which serves as an intake valve (10), characterized in that the intake valve (10) is designed as a valve according to one of the preceding Claims 1 to 5.

## Revendications

1. Soupape (10), pouvant être commandée, comprenant un orifice d'entrée (42) et un orifice de sortie (36) et entre les deux un premier étage de soupape, qui présente un premier corps d'obturation (14) de la soupape actionnable et coopérant avec un premier siège de soupape(18), un deuxième étage de soupape, qui présente un deuxième corps d'obturation (16) de la soupape pouvant être contourné, qui coopère avec un deuxième siège de soupape (20), la surface de la section transversale de son ouverture étant plus grande que la surface de la section transversale d'ouverture du premier siège de soupape (18) et le deuxième corps d'obturation (16) de la soupape présentant le premier siège de soupape, avec un premier élément à ressort (28) pour presser le premier corps d'obturation (14) contre le premier siège de soupape (18) et pour fermer le deuxième étage de soupape, et avec un deuxième élément à ressort (32) pour décoller le deuxième corps d'obturation (16) du deuxième siège de soupape (20), les premier et deuxième éléments à ressort (28, 32) agissant indirectement l'un contre l'autre, et la force du premier élément à ressort (28) étant plus grande que la force du deuxième élément à ressort (32),
caractérisée en ce qu'
une différence de pression entre l'orifice d'entrée (42) et l'orifice de sortie (36) même après l'ouverture du premier étage de soupape (14, 18) agit finalement sur le deuxième étage de soupape (16, 20).

2. Soupape selon la revendication 1,
caractérisée en ce que
la soupape (10) présente un électroaimant (30, 44) pour actionner le premier corps d'obturation (14) de la soupape.

3. Soupape selon la revendication 1 ou 2,
caractérisée en ce que
le premier corps d'obturation (14) et le deuxième corps d'obturation (16) sont logés de façon coaxiale dans une pièce tubulaire (34) présentant le deuxième siège de soupape (20), en pouvant coulisser axialement.

4. Soupape selon la revendication 3,
caractérisée par
un noyau magnétique cylindrique (30) coaxial et hydrauliquement étanche dans la pièce tubulaire (34).

5. Soupape selon la revendication 3 ou 4,
caractérisée en ce que
- le premier corps d'obturation (14) présente une armature (12) et
- une section longitudinale de la pièce tubulaire (34) est entourée par une bobine (44) de l'électroaimant, dans laquelle pénètrent le noyau magnétique (30) et l'armature (12).

6. Installation hydraulique de freinage de véhicule (78), comprenant un système de régulation protégeant le véhicule contre le blocage des roues, et/ou un système de régulation contre le patinage et/ou un système de régulation de la dynamique de marche, qui présente au moins une pompe de refoulement (76) et une conduite d'aspiration montée en amont de celle-ci, provenant d'un maître cylindre de freinage (80) avec une soupape incorporée pouvant être commandée, qui sert de soupape d'aspiration (10),
caractérisée par
une soupape d'aspiration (10) sous la forme d'une soupape selon l'une des revendications 1 à 5 précédentes.
